# EUROPÄISCHE PATENTSCHRIFT

(11) **EP 2 428 732 B1**
(45) Veröffentlichungstag und Bekanntmachung des Hinweises auf die Patenterteilung: **13.02.2019**
(21) Anmeldenummer: 11176734.9
(22) Anmeldetag: 05.08.2011
(51) Int. Cl.: F23N 5/00

(54) **Verfahren zur Kalibrierung einer Gasbrennerregelung**
Method for calibrating a gas burner control
Procédé de calibrage d'une régulation de brûleur à gaz

(30) Priorität: 08.09.2010 DE 102010044762
(43) Veröffentlichungstag der Anmeldung: 14.03.2012
(73) Patentinhaber: Honeywell Technologies Sarl, 1180 Rolle (CH)
(72) Erfinder: Munsterhuis, Wim, 7751GP Dalen, Drenthe (NL); Langius, Gerwin, 7772ZB Hardenberg, OV (NL)
(74) Vertreter: Sturm, Christoph

(56) Entgegenhaltungen:
- EP-A1- 0 156 958
- EP-A1- 0 646 752
- EP-A2- 1 331 444
- WO-A1-93/10402

## Beschreibung

Die Erfindung betrifft ein Verfahren zur Kalibrierung einer Gasbrennerregelung nach dem Oberbegriff des Anspruchs 1. Des Weiteren betrifft die Erfindung ein Verfahren zur Gasbrennerregelung nach dem Oberbegriff des Anspruchs 6.

Aus der DE 198 24 521 A1 ist ein Verfahren zur Gasbrennerregelung bekannt, bei welchem einem Gasbrenner ein Gas-Verbrennungsluft-Gemisch zur Verbrennung zugeführt wird. Das Gas-Verbrennungsluft-Gemisch wird durch Vermischen einer Gasströmung und einer Luftströmung bzw. Verbrennungsluftströmung bereitgestellt, wobei die Menge des dem Gasbrenner zugeführten Gas-Verbrennungsluft-Gemischs und damit eine sogenannte Brennerlast über ein Gebläse, nämlich eine Drehzahl des Gebläses, eingestellt wird. Das Gebläse ist nach diesem Stand der Technik der Luftströmung zugeordnet. Über ein der Gasströmung zugeordnetes Gasventil wird die Gasströmung abhängig von der Verbrennungsluftströmung derart eingestellt, dass eine vorgegebene, definierte Zusammensetzung des Gas-Verbrennungsluft-Gemischs aufrechterhalten wird, nämlich im Sinne einer 1:1-Gas/Luft-Verbundregelung oder auch zur Ausbildung einer 1:N-Gas/Luft-Verbundregelung. Hierzu ist nach diesem Stand der Technik zwischen die Gasströmung und die Verbrennungsluftströmung ein Sensor geschaltet, dessen Messsignal einem Regelgerät zugeführt wird, das abhängig vom Messsignal des Sensors das Gasventil derart ansteuert, dass die definierte Zusammensetzung des Gas-Verbrennungsluft-Gemischs aufrechterhalten wird.

Um auch bei schwankenden Gasqualitäten eine gute Verbrennungsqualität im Gasbrenner zu gewährleisten, muss die Zusammensetzung des dem Gasbrenner zur Verbrennung zuzuführenden Gas-Verbrennungsluft-Gemischs an die Gasqualität angepasst werden.

So kann bei einem Gas mit einem hohen Brennwert die Gasmenge im Vergleich zur Luftmenge im Gas-Verbrennungsluft-Gemisch reduziert werden. Liegt hingegen ein Gas mit einem geringen Brennwert vor, so muss die Gasmenge in dem Gas-Verbrennungsluft-Gemisch erhöht werden. Die Anpassung der Zusammensetzung des Gas-Verbrennungsluft-Gemischs insbesondere an die Gasqualität erfolgt über eine Kalibrierung der Gasbrennerregelung.

Aus der EP 1 331 444 A2 ist ein Verfahren zur Regelung eines Gasbrenners bekannt, bei welchem die Kalibrierung der Zusammensetzung des Gas-Verbrennungsluft-Gemischs über einen Kohlenmonoxid-Sensor erfolgt, der einem vom Gasbrenner abgeführten Abgasstrom zugeordnet ist. Der Kohlenmonoxid-Sensor erfasst die Kohlenmonoxid-Konzentration im Abgas. Nach diesem Stand der Technik wird zur Kalibrierung des Gas-Verbrennungsluft-Gemischs, nämlich der Zusammensetzung des Gas-Verbrennungsluft-Gemischs, so vorgegangen, dass das Gas-Verbrennungsluft-Gemisch ausgehend von einer beliebigen, relativ mageren Zusammensetzung angefettet wird, und zwar so lange, bis die vom Kohlenmonoxid-Sensor erfasste Kohlenmonoxid-Konzentration im Abgas einen vorgegebenen Grenzwert erreicht bzw. überschreitet. Bei Erreichen bzw. Überschreiten dieses Grenzwerts wird das Gas-Verbrennungsluft-Gemisch nach diesem Stand der Technik nicht weiter angefettet, vielmehr wird diese Zusammensetzung des Gas-Verbrennungsluft-Gemischs einem sogenannten Verbrennungsluftverhältnis λ von 1,08 zugeordnet. Ausgehend von dem aufs Verbrennungsluftverhältnis λ=1,08 kalibrierten Gas-Verbrennungsluft-Gemisch kann nachfolgend die Zusammensetzung desselben zur Bereitstellung eines größeren Verbrennungsluftverhältnisses abgemagert werden.

Dieses aus der EP 1 131 444 A2 bekannte Kalibrierungsverfahren verfügt über den Nachteil, dass dasselbe abhängig von der Brennerlast ist. Insofern muss bei Verwendung des aus diesem Stand der Technik bekannten Verfahrens für jede Brennerlast eine eigene Kalibrierung vorgenommen werden. Dies ist von Nachteil.

Es besteht daher Bedarf an einem Verfahren zur Kalibrierung einer Gasbrennerregelung, welches unabhängig von einer sogenannten Brennerlast ist.

Der Erfindung liegt die Aufgabe zu Grunde, ein neuartiges Verfahren zur Kalibrierung einer Gasbrennerregelung sowie ein neuartiges Verfahren zur Gasbrennerregelung zu schaffen. Diese Aufgabe wird durch ein Verfahren zur Kalibrierung einer Gasbrennerregelung gemäß Anspruch 1 gelöst. Erfindungsgemäß wird zur Kalibrierung der Gasbrennerregelung das Gas-Verbrennungsluft-Gemisch ausgehend von einem relativ mageren Gas-Verbrennungsluft-Gemisch, welches dem Gasbrenner zu Verbrennung zugeführt wird, angefettet, nämlich solange, bis zunächst das vom Sensor bereitgestellte Messsignal ansteigt und anschließend auf in etwa Null absinkt, wobei das Gas-Verbrennungsluft-Gemisch, bei welchem das vom Sensor bereitgestellte Messsignal in etwa Null beträgt, als Gas-Verbrennungsluft-Gemisch mit einem stöchiometrischen Verbrennungsluftverhältnis λ=1 definiert wird, wobei ausgehend von diesem Gas-Verbrennungsluft-Gemisch dasselbe auf ein gewünschtes Verbrennungsluftverhältnis λ>1 abgemagert wird.

Das erfindungsgemäße Verfahren zur Gasbrennerregelung ist in Anspruch 6 definiert.

Bevorzugte Weiterbildungen der Erfindung ergeben sich aus den Unteransprüchen und der nachfolgenden Beschreibung. Nachfolgend werden Ausführungsbeispiele der Erfindung, ohne hierauf beschränkt zu sein, anhand der Zeichnung näher erläutert. In der Zeichnung zeigt:
- Fig. 1: eine schematisierte Darstellung einer Gasbrennerregelung zur Verdeutlichung des erfindungsgemäßen Verfahrens; und
- Fig. 2: ein Diagramm zur weiteren Verdeutlichung des Erfindungsgemäßen Verfahrens.

Die hier vorliegende Erfindung betrifft ein Verfahren zur Kalibrierung einer Gasbrennerregelung sowie ein Verfahren zur Gasbrennerregelung.

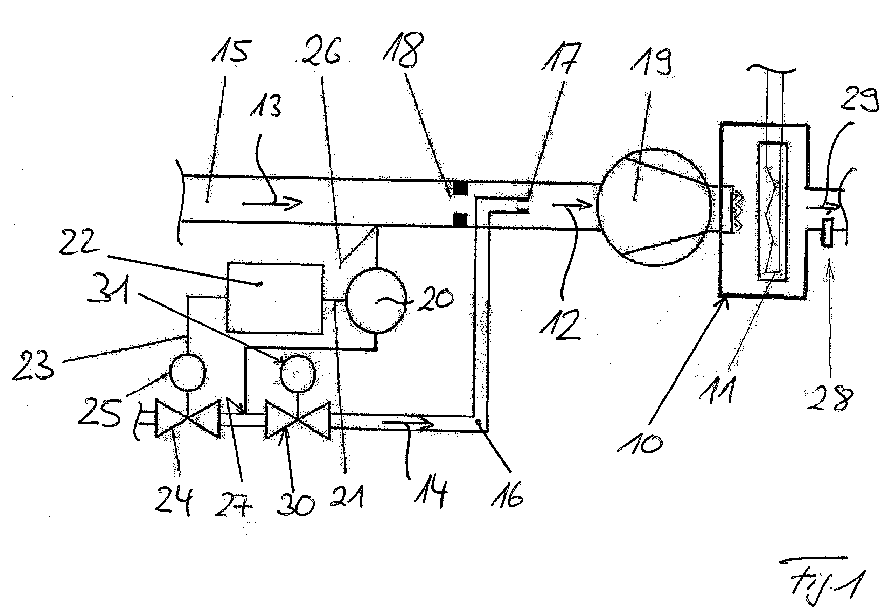

Fig. 1 zeigt stark schematisiert einen exemplarischen Aufbau einer Gasbrennerregelung, wobei einem Gasbrenner 10, in dessen Brennkammer im gezeigten Ausführungsbeispiel ein Wärmetauscher 11 positioniert ist, zur Verbrennung ein Gas-Verbrennungsluft-Gemisch 12 zugeführt wird. Das dem Gasbrenner 10 zur Verbrennung zuzuführende Gas-Verbrennungsluft-Gemisch 12 wird durch Vermischen einer Luftströmung bzw. Verbrennungsluftströmung 13 und einer Gasströmung 14 bereitgestellt, wobei die Verbrennungsluftströmung 13 über eine Verbrennungsluftleitung 15 und die Gasströmung 14 über eine Gasleitung 16 geführt wird, und wobei die Gasleitung 16, nämlich eine Gasdüse 17 derselben, stromabwärts an einer Drosselstelle 18 der Verbrennungsluftleitung 15 in dieselbe mündet.

Die Menge des dem Gasbrenner 10 zur Verbrennung zuzuführenden Gas-Verbrennungsluft-Gemischs 12 wird über ein Gebläse 19, nämlich eine Drehzahl des Gebläses 19, eingestellt, wobei das Gebläse 19 gemäß Fig. 1 der Gas-Verbrennungsluft-Gemischströmung 12 zugeordnet ist.

Um unabhängig von der über das Gebläse 13 angesaugten Menge der Verbrennungsluft 13 dem Gasbrenner 10 ein Gas-Verbrennungsluft-Gemisch 12 mit einer definierten Zusammensetzung im Sinne einer 1:N-Gas/Luft-Verbundregelung bereitzustellen, ist im Ausführungsbeispiel der Fig. 1 zwischen die Verbrennungsluftleitung 15 und die Gasleitung 16 ein Sensor 20 geschaltet, dessen Messgröße 21 einem Regelgerät 22 zugeführt wird, welches abhängig von der Messgröße 21 des Sensors 20 eine Stellgröße 23 zur Ansteuerung eines Gasventils 24, nämlich eines Stellmotors 25 des Gasventils 24 ausgibt, um so die Gasströmung 14 einzustellen und in dem Gas-Verbrennungsluft-Gemisch 12 das definierte Gas-Verbrennungsluftverhältnis im Sinne einer 1:N-Gas/Luft-Verbundregelung aufrechtzuerhalten.

Im gezeigten Ausführungsbeispiel der Fig. 1 handelt es sich beim Sensor 20 um einen Sensor, der ein elektrisches bzw. elektronisches Messsignal 21 für das Regelgerät 22 bereitstellt, wobei der Sensor 20 mit einem ersten Messpunkt 26 an der Verbrennungsluftleitung 15 und einem zweiten Messpunkt 27 an der Gasleitung 16 angreift.

Es sei an dieser Stelle darauf hingewiesen, dass die 1:N-Gas/Luft-Verbundregelung auch auf pneumatischem Weg bereit gestellt werden kann.

Um insbesondere bei schwankenden Gasqualitäten eine gute Verbrennungsqualität im Gasbrenner 10 zu gewährleisten, ist eine Kalibrierung der Gasbrennerregelung erforderlich, wobei im Ausführungsbeispiel der Fig. 1 zur Kalibrierung der Gasbrennerregelung ein Sensor 28 verwendet wird, der einem vom Gasbrenner 10 abgeführten Abgasstrom 29 zugeordnet ist. Im Nachfolgenden soll davon ausgegangen werden, dass dieser Sensor 28 als Kohlenmonoxid-Sensor ausgeführt ist, der bei Vorliegen von Sauerstoff im Abgas die Konzentration an brennbarem bzw. oxidierbarem Kohlenmonoxid im Abgas 29 des Gasbrenners 10 misst. Anstelle eines Kohlenmonoxid-Sensors kann jedoch auch jeder andere Sensor verwendet werden, mithilfe dessen bei Vorliegen von Sauerstoff im Abgas mindestens ein brennbarer bzw. oxidierbarer Bestandteil im brennbaren bzw. oxidierbaren Abgas 29 des Gasbrenners 10 erfasst werden kann. Solche Sensoren werden auch als COₑ-Sensoren bezeichnet.

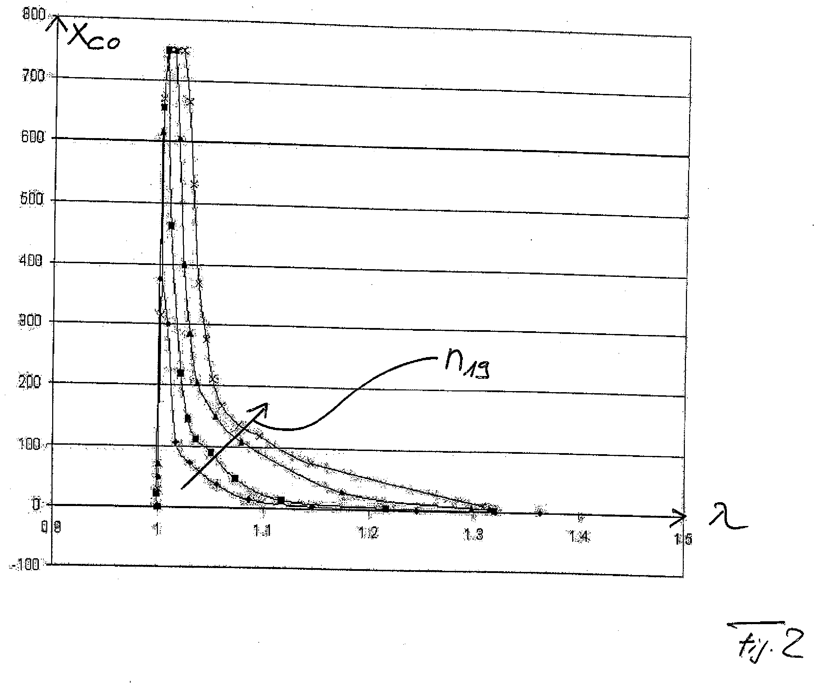

Fig. 2 zeigt für einen solchen, als Kohlenmonoxid-Sensor ausgebildeten Sensor 28 über der sogenannten Luftzahl bzw. dem sogenannten Verbrennungsluftverhältnis λ für unterschiedliche Brennerlasten eine sich im Abgas ausbildende Konzentration X_{CO} an Kohlenmonoxid CO, wobei Fig. 2 entnommen werden kann, dass die sich im Abgas ausbildende Kohlenmonoxid-Konzentration X_{CO} bei einer definierten Luftzahl λ von der Brennerlast abhängig ist, die im Ausführungsbeispiel der Fig. 1 durch die Drehzahl n₁₉ des Gebläses 19 und damit durch die Menge der dem Gasbrenner 10 zugeführten Gas-Verbrennungsluft-Gemischströmung 12 bestimmt wird.

Zur Kalibrierung der Gasbrennerregelung wird nun erfindungsgemäß so vorgegangen, dass ausgehend von einem relativ mageren Gas-Verbrennungsluft-Gemisch 12 mit beliebiger Zusammensetzung, welches dem Gasbrenner 10 zur Verbrennung aktuell zugeführt wird, das Gas-Verbrennungsluft-Gemisch 12 unter Verringerung des Verbrennungsluftverhältnisses λ bzw. der Luftzahl angefettet wird, nämlich so lange, bis zunächst das vom Sensor 28 bereit gestellte Messsignal ansteigt und anschließend auf in etwa Null absinkt. Das Gas-Verbrennungsluft-Gemisch 12, bei welchem das vom Sensor 28 bereitgestellte Messsignal, also die vom Sensor gemessene Kohlenmonoxid-Konzentration X_{CO}, in etwa Null beträgt, wird als Gas-Verbrennungsluft-Gemisch 12 mit einem stöchiometrischen Verbrennungsluftverhältnis λ=1 definiert. Ausgehend von diesem Gas-Verbrennungsluft-Gemisch 12 mit dem stöchiometrischen Verbrennungsluftverhältnis λ=1 wird nachfolgend das Gas-Verbrennungsluft-Gemisch 12 auf ein gewünschtes Verbrennungsluftverhältnis λ>1, zum Beispiel auf ein Gas-Verbrennungsluft-Gemisch mit einem Verbrennungsluftverhältnis λ>1.3, abgemagert.

Bei der obigen, erfindungsgemäßen Kalibrierung der Gasbrennerregelung wird zur Anfettung und nachfolgenden Abmagerung des Gas-Verbrennungsluft-Gemischs 12 vorzugsweise eine der Gasströmung 14 zugeordnete Gasflussverstelleinrichtung verstellt, um so die Gasmenge des Gas-Verbrennungsluft-Gemischs anzupassen. Bei dieser Gasflussverstellereinrichtung kann es sich um die Gasdüse 17 handeln. Alternativ kann eine separate, in die Gasleitung 16 integrierte Gasflussverstelleinrichtung 30 oder eine in das Gasventil 24 integrierte Gasflussverstelleinrichtung zur Kalibrierung verwendet werden.

Die zur Kalibrierung verwendete Gasflussverstelleinrichtung muss im Ausführungsbeispiel der Fig. 1 hinter der Messstelle 27 positioniert sein, an welcher der Sensor 20 an der Gasleitung 16 angreift. Würde demnach eine in das Gasventil 24 integrierte Gasflussverstelleinrichtung zur Kalibrierung verwendet werden, so müsste die Messstelle 27 der Fig. 1 verlagert werden.

Fig. 1 zeigt einen Stellmotor 31, für den die Öffnungsstellung der Gasflussverstelleinrichtung 30 zur Kalibrierung angepasst werden kann.

Ausgehend von derjenigen Öffnungsstellung der Gasflussverstelleinrichtung 30, bei welcher das Gas-Verbrennungsluft-Gemisch 12 im Wege der erfindungsgemäßen Kalibrierung mit dem stöchiometrischen Verbrennungsluftverhältnis λ=1 definiert wird, wird die Gasflussverstelleinrichtung 30 zur Bereitstellung eines Verbrennungsluftverhältnisses von λ>1 um ein definiertes Maß weiter geschlossen, wobei dieses definierte Maß von Kenngröße der Gasflussverstelleinrichtung 30 abhängig ist und abhängig von Kenngrößen der Gasflussverstelleinrichtung 30 ermittelt wird.

Zur erfindungsgemäßen Kalibrierung wird ein nicht kalibrierter Sensor, nämlich im gezeigten Ausführungsbeispiel ein nicht kalibrierter Kohlenmonoxid-Sensor 28, verwendet, der bei Vorliegen von Sauerstoff im Abgas 29 die Konzentration von Kohlenmonoxid im Abgas 29 erfasst.

Die erfindungsgemäße Kalibrierung der Gasbrennerregelung wird nach Vorliegen eines die Kalibrierung auslösenden Ereignisses automatisch durchgeführt.

Bei einem die Kalibrierung auslösenden Ereignis kann es sich um ein in regelmäßigen Zeitabständen auftretendes Signal handeln, um in definierten Zeitabständen eine Kalibrierung der Gasbrennerregelung durchzuführen.

Bei einem weiteren Ereignis kann es sich um ein manuell ausgelöstes Signal handeln, um ausgelöst durch einen Monteur eine Kalibrierung der Gasbrennerregelung durchzuführen.

Weiterhin kann abhängig von dem vom Sensor 28 bereitgestellten Messsignal eine Kalibrierung ausgelöst werden, nämlich dann, wenn die vom Sensor 28 gemessene Kohlenmonoxid-Konzentration X_{CO} einen Grenzwert überschreitet.

Das Signal des Sensors 28 wird ausschließlich zur Kalibrierung und nicht zur 1:N-Gas/Luft-Verbundregelung verwendet. Zur 1:N-Gas/Luft-Verbundregelung dient der Sensor 20, wobei die über das Gebläse 19 bereitgestellte Luftströmung 13 regelungstechnisch als Führungsgröße für die Gasströmung 14 dient, um die definierte 1:N-Gas/Luft-Verbundregelung bereitzustellen.

Bei der Kalibrierung unter Verwendung des Sensors 28 kann die Zusammensetzung des Gas-Luft-Gemischs 12 an angepasst werden, um unterschiedliche Gasqualitäten auszugleichen. Dazu wird abhängig vom Messsignal des Sensors 28 eine Gasflussverstelleinrichtung 30 verstellt, deren Öffnungsposition bei der nachfolgenden 1:N-Gas/Luft-Verbundregelung unverändert bleibt. Bei der nachfolgenden 1:N-Gas/Luft-Verbundregelung wird zur Nachführung der Gasströmung 14 an die Luftströmung 13 das Gasventil 24 angesteuert.

Die erfindungsgemäße Kalibrierung einer Gasbrennerregelung ist unabhängig von der sogenannten Brennerlast.

### Bezugszeichenliste

- 10: Gasbrenner
- 11: Wärmetauscher
- 12: Gas-Verbrennungsluft-Gemisch
- 13: Verbrennungsluftströmung
- 14: Gasströmung
- 15: Verbrennungsluftleitung
- 16: Gasleitung
- 17: Gasdüse
- 18: Drosselstelle
- 19: Gebläse
- 20: Sensor
- 21: Messgröße
- 22: Regelgerät
- 23: Stellgröße
- 24: Gasventil
- 25: Stellmotor
- 26: Messpunkt
- 27: Messpunkt
- 28: Sensor
- 29: Abgasstrom
- 30: Gasflussverstelleinrichtung
- 31: Stellmotor

## Patentansprüche

1. Verfahren zur Kalibrierung einer Gasbrennerregelung unter Verwendung eines dem vom Gasbrenner abgeführten Abgas zugeordneten Sensors, der die Konzentration mindestens eines brennbaren bzw. oxidierbaren Bestandteils im Abgas misst, wobei zur Kalibrierung ausgehend von einem relativ mageren Gas-Verbrennungsluft-Gemisch, welches dem Gasbrenner zur Verbrennung zugeführt wird, das Gas-Verbrennungsluft-Gemisch derart angefettet wird, dass das vom Sensor bereitgestellte Messsignal ansteigt, und wobei hierbei ein Verbrennungsluftverhältnis des Gas-Verbrennungsluft-Gemisch definiert und ausgehend von diesem Gas-Verbrennungsluft-Gemisch das Gas-Verbrennungsluft-Gemisch auf ein gewünschtes Verbrennungsluftverhältnis abgemagert wird, **dadurch gekennzeichnet, dass** bei der Kalibrierung das Gas-Verbrennungsluft-Gemisch solange angefettet wird, bis nach dem Ansteigen des vom Sensor bereitgestellten Messsignals dasselbe anschließend auf in etwa Null absinkt, wobei das Gas-Verbrennungsluft-Gemisch, bei welchem das vom Sensor bereitgestellte Messsignal in etwa Null beträgt, als Gas-Verbrennungsluft-Gemisch mit einem stöchiometrischen Verbrennungsluftverhältnis λ=1 definiert wird, und dass ausgehend von diesem Gas-Verbrennungsluft-Gemisch das Gas-Verbrennungsluft-Gemisch auf ein gewünschtes Verbrennungsluftverhältnis λ>1 abgemagert wird.

2. Verfahren nach Anspruch 1, **dadurch gekennzeichnet, dass** zur Kalibrierung ein nicht kalibrierter Sensor, insbesondere ein Kohlenmonoxid-Sensor, der bei Vorliegen von Sauerstoff im Abgas die Konzentration von Kohlenmonoxid im Abgas misst, verwendet wird.

3. Verfahren nach Anspruch 1 oder 2, **dadurch gekennzeichnet, dass** bei der Kalibrierung der Gasbrennerregelung zur Anfettung und nachfolgenden Abmagerung des Gas-Verbrennungsluft-Gemischs eine einer Gasströmung zugeordnete Gasflussverstelleinrichtung, insbesondere eine Gasdüse, verstellt wird, um so eine mit einem Verbrennungsluftstrom zu vermischende Gasmenge und so die Zusammensetzung des dem Gasbrenner zur Verbrennung zuzuführenden Gas-Verbrennungsluft-Gemischs einzustellen.

4. Verfahren nach Anspruch 3, **dadurch gekennzeichnet, dass** ausgehend von derjenigen Öffnungsstellung der Gasflussverstelleinrichtung, bei welcher das Gas-Verbrennungsluft-Gemisch mit dem stöchiometrischen Verbrennungsluftverhältnis λ=1 definiert wird, die Gasflussverstelleinrichtung zur Bereitstellung eines Verbrennungsluftverhältnisses von λ>1 um ein definiertes Maß weiter geschlossen wird, welches abhängig von Kenngrößen der Gasflussverstelleinrichtung ermittelt wird.

5. Verfahren nach einem der Ansprüche 1 bis 4, **dadurch gekennzeichnet, dass** die Kalibrierung einer Gasbrennerregelung nach Vorliegen eines die Kalibrierung auslösenden Ereignisses automatisch durchgeführt wird.

6. Verfahren zur Gasbrennerregelung, wobei einem Gasbrenner ein Gas-Verbrennungsluft-Gemisch zur Verbrennung zugeführt wird, welches durch Vermischen einer Gasströmung und einer Luftströmung bereitgestellt wird, wobei die Menge des dem Gasbrenner zugeführten Gas-Verbrennungsluft-Gemischs und damit eine Brennerlast über ein Gebläse, welches der Luftströmung oder der Gas-Verbrennungsluft-Gemischströmung zugeordnet ist, eingestellt wird, wobei die Gasströmung über ein der Gasströmung zugeordnetes Gasventil abhängig von der Luftströmung derart eingestellt wird, dass unabhängig von der Luftströmung eine vorgegebene, definierte Zusammensetzung des Gas-Verbrennungsluft-Gemischs aufrechterhalten wird, und wobei zur Kalibrierung der Gasbrennerregelung, nämlich zur Kalibrierung der Zusammensetzung des Gas-Verbrennungsluft-Gemischs, ein dem vom Gasbrenner abgeführten Abgas zugeordneter Sensor, der die Konzentration mindestens eines brennbaren bzw. oxidierbaren Bestandteils im Abgas misst, verwendet wird, **dadurch gekennzeichnet, dass** die Kalibrierung der Gasbrennerregelung nach einem oder mehreren der Ansprüche 1 bis 5 durchgeführt wird.

## Claims

1. Method for the calibration of a gas burner regulating system using a sensor which is associated with the exhaust gas discharged from the gas burner and measures the concentration of at least one combustible or oxidizable constituent in the exhaust gas, wherein for the calibration, starting from a relatively lean gas-combustion-air mixture which is fed to the gas burner for combustion, the gas-combustion-air mixture is enriched in such a way that the measurement signal which is provided by the sensor increases, and wherein in this case a combustion air ratio of the gas-combustion-air mixture is defined and, starting from this gas-combustion-air mixture, the gas-combustion-air mixture is enleaned to a desired combustion air ratio, **characterized in that** in the calibration the gas-combustion-air mixture is enriched until, after the measurement signal which is provided by the sensor has increased, said measurement signal then reduces to approximately zero, wherein the gas-combustion-air mixture, in which the measurement signal which is provided by the sensor amounts to approximately zero, is defined as a gas-combustion-air mixture with a stoichiometric combustion air ratio of λ = 1, and **in that** starting from this gas-combustion-air mixture the gas-combustion-air mixture is enleaned to a desired combustion air ratio of λ > 1.

2. Method according to Claim 1, **characterized in that** for the calibration use is made of a non-calibrated sensor, especially a carbon monoxide sensor, which with oxygen present in the exhaust gas measures the concentration of carbon monoxide in the exhaust gas.

3. Method according to Claim 1 or 2, **characterized in that** during the calibration of the gas burner regulating system, a gas flow rate adjusting device, especially a gas nozzle, which is associated with the gas flow, is adjusted for the enriching and subsequent enleaning of the gas-combustion-air mixture in order to thereby adjust a quantity of gas which is to be intermixed with a combustion air flow and to thereby adjust the composition of the gas-combustion-air mixture which is to be fed to the gas burner for combustion.

4. Method according to Claim 3, **characterized in that** starting from that opening position of the gas flow rate adjusting device in which the gas-combustion-air mixture is defined with the stoichiometric combustion air ratio of λ = 1, the gas flow rate adjusting device, for providing a combustion air ratio of λ > 1, is closed further by a defined degree which is determined in dependence upon characteristics of the gas flow rate adjusting device.

5. Method according to one of Claims 1 to 4, **characterized in that** the calibration of a gas burner regulating system is carried out automatically after there being an event which triggers the calibration.

6. Method for gas burner regulation, wherein a gas-combustion-air mixture, which is provided as a result of intermixing a gas flow and an air flow, is fed to a gas burner for combustion, wherein the quantity of gas-combustion-air mixture which is fed to the gas burner, and therefore a burner load, is adjusted by means of a blower which is associated with the air flow or with the gas-combustion-air mixture flow, wherein the gas flow, by means of a gas valve which is associated with the gas flow, is adjusted in dependence upon the air flow in such a way that a prespecified, defined composition of the gas-combustion-air mixture is maintained independently of the air flow, and wherein for calibration of the gas burner regulating system, specifically for calibration of the composition of the gas-combustion-air mixture, use is made of a sensor which is associated with the exhaust gas discharged from the gas burner and measures the concentration of at least one combustible or oxidizable constituent in the exhaust gas, **characterized in that** the calibration of the gas burner regulating system is carried out according to one or more of Claims 1 to 5.

## Revendications

1. Procédé pour étalonner une régulation de brûleur à gaz en utilisant un capteur associé aux gaz de fumée évacués par le brûleur à gaz, lequel mesure la concentration d'au moins une composante combustible ou oxydable dans les gaz de fumée, dans lequel, en partant d'un mélange gaz-air de combustion relativement pauvre qui est acheminé au brûleur à gaz pour la combustion, l'étalonnage est effectué en enrichissant le mélange gaz-air de combustion de telle sorte que le signal de mesure délivré par le capteur monte, puis un taux d'air de combustion du mélange gaz-air de combustion est ici défini et le mélange gaz-air de combustion est appauvri à un taux d'air de combustion souhaité en partant de ce mélange gaz-air de combustion, **caractérisé en ce que** lors de l'étalonnage, le mélange gaz-air de combustion est enrichi jusqu'à ce que le signal de mesure délivré par le capteur, après sa montée, chute ensuite approximativement à zéro, le mélange gaz-air de combustion avec lequel le signal de mesure délivré par le capteur est approximativement égal à zéro étant défini comme un mélange gaz-air de combustion ayant un taux d'air de combustion stoechiométrique λ = 1, et **en ce que** le mélange gaz-air de combustion, à partir de ce mélange gaz-air de combustion, est appauvri à un taux d'air de combustion souhaité λ > 1.

2. Procédé selon la revendication 1, **caractérisé en ce qu'**un capteur non étalonné, notamment un capteur de monoxyde de carbone qui, en présence d'oxygène, mesure la concentration de monoxyde de carbone dans les gaz de fumée, est utilisé pour l'étalonnage.

3. Procédé selon la revendication 1 ou 2, **caractérisé en ce que** lors de l'étalonnage de la régulation de brûleur à gaz, un dispositif de réglage du débit de gaz associé au flux de gaz, notamment une buse à gaz, est réglé pour un enrichissement et ensuite un appauvrissement du mélange gaz-air de combustion afin de régler ainsi une quantité de gaz à mélanger avec le débit d'air de combustion et, de ce fait, la composition du mélange gaz-air de combustion à acheminer au brûleur à gaz en vue de la combustion.

4. Procédé selon la revendication 3, **caractérisé en ce qu'**en partant de la position d'ouverture du dispositif de réglage du débit de gaz à laquelle est défini le mélange gaz-air de combustion ayant un taux d'air de combustion stoechiométrique λ = 1, le dispositif de réglage du débit de gaz est fermé davantage, en vue de fournir un taux d'air de combustion de λ > 1, d'une cote définie qui est déterminée en fonction des grandeurs caractéristiques du dispositif de réglage du débit de gaz.

5. Procédé selon l'une des revendications 1 à 4, **caractérisé en ce que** l'étalonnage d'une régulation de brûleur à gaz est effectué automatiquement après la présence d'un événement qui déclenche l'étalonnage.

6. Procédé de régulation de brûleur à gaz, un mélange gaz-air de combustion étant acheminé à un brûleur à gaz pour la combustion, lequel est fourni en mélangeant un flux de gaz et un flux d'air, la quantité de mélange gaz-air de combustion qui est acheminé au brûleur à gaz et ainsi une charge de brûleur étant réglée par le biais d'une soufflerie qui est associée au flux d'air ou au flux de mélange gaz-air de combustion, le flux de gaz étant réglé par le biais d'une valve à gaz associée au flux de gaz en fonction du flux d'air de telle sorte qu'une composition définie prédéterminée du mélange gaz-air de combustion est maintenue indépendamment du flux d'air, et un capteur associé aux gaz de fumée évacués par le brûleur à gaz, lequel mesure la concentration d'au moins une composante combustible ou oxydable dans les gaz de fumée, est utilisé en vue de l'étalonnage de la régulation du brûleur à gaz, à savoir pour l'étalonnage de la composition du mélange gaz-air de combustion, **caractérisé en ce que** l'étalonnage de la régulation du brûleur à gaz est effectué selon l'une ou plusieurs des revendications 1 à 5.
